# EUROPEAN PATENT APPLICATION

(11) **EP 1 845 128 A1**
(43) Date of publication of application: **17.10.2007**
(21) Application number: 06712791.0
(22) Date of filing: 01.02.2006
(51) Int. Cl.: C08L 27/12, B32B 25/14, C08K 5/13, C08K 5/3447, C08K 5/3462

(54) **CROSSLINKABLE COMPOSITION AND MULTILAYER BODY MADE OF SAME**

(30) Priority: 04.02.2005 JP 2005029872
(71) Applicant: DAIKIN INDUSTRIES, LTD., Osaka-shi, Osaka 530-8323 (JP)
(72) Inventor: KAWASAKI, Kazuyoshi, 1-1, Nishihitotsuya, Settsu-shi, Osaka, (JP); MATSUMOTO, Kazuhisa, 1-1, Nishihitotsuya, Settsu-shi, Osaka, (JP); KISHINE, Mitsuru, 1-1, Nishihitotsuya, Settsu-shi, Osaka, (JP)
(74) Representative: HOFFMANN EITLE
(86) International application number: PCT/JP2006/301648
(87) International publication number: WO 2006/082843

(57) **Abstract**

The present invention provides a crosslinkable composition comprising a fluorine-containing rubber, a crosslinking agent and an additive, a laminated article having a rubber layer formed by using the composition, and a hose. The crosslinkable composition comprises a fluorine-containing rubber, a crosslinking agent and an additive, in which the additive is at least one compound selected from the group consisting of a compound represented by the formula (1): 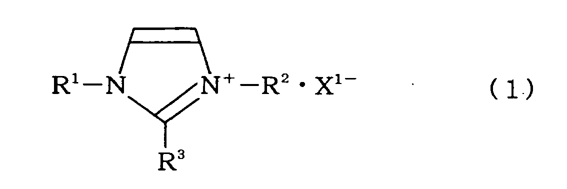 wherein R¹, R² and R³ are the same or different and each is hydrogen atom or a monovalent organic group having 1 to 30 carbon atoms; X¹⁻ is a monovalent anion,
a compound represented by the formula (2): 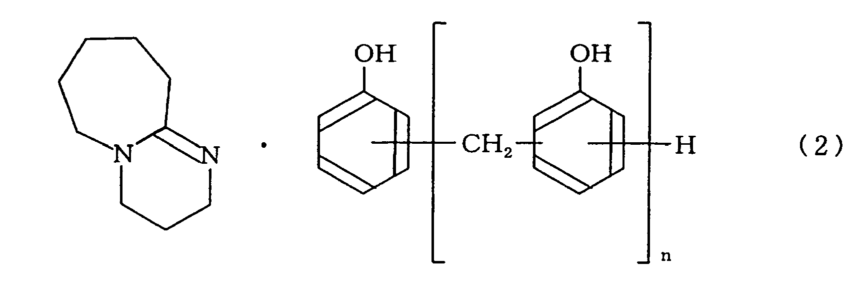 wherein n is 0 or an integer of 1 to 50, and
a compound represented by the formula (3):

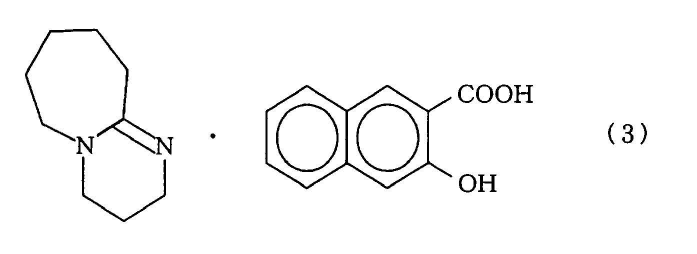

## Description

### TECHNICAL FIELD

The present invention relates to a crosslinkable composition comprising a fluorine-containing rubber, a crosslinking agent and an additive, a laminated article having a rubber layer formed by using the composition, and a hose.

### BACKGROUND ART

Fluorine-containing rubbers are widely employed for various uses in the fields of automobile industries, semiconductor industries and chemical industries, since those rubbers exhibit excellent chemical resistance, solvent resistance and heat resistance. For example, in the fields of automobile industries, fluorine-containing rubbers are used for hoses and sealing materials of engines and peripheral devices thereof, automatic transmission devices, and fuel systems and peripheral devices thereof. However the present situation is such that as environmental regulations have been made rigorous, strict requirements have been imposed on materials made of fluorine-containing rubbers with respect to characteristics thereof such as anti-aging property, weather resistance, processability, oil resistance, fuel oil resistance and fuel permeability.

Fluorine-containing rubbers exhibit the mentioned excellent characteristics, but prices thereof are as high as 10 to 20 times the prices of usual rubber materials, and also there is a problem with cold resistance. Accordingly, when materials for hoses are made of fluorine-containing rubbers only, there is a problem with cost and cold resistance. Also, an acrylonitrile-butadiene copolymer rubber which has been used for fuel oil hoses, is inferior in characteristics such as heat resistance, oil resistance and anti-aging property as compared with fluorine-containing rubbers, and improvement thereof has been demanded.

Accordingly, a hose comprising a thin inner layer made of a fluorine-containing rubber and an outer layer made of a non-fluorine-containing rubber such as an epichlorohydrin rubber has been developed. In the case of such a hose comprising a fluorine-containing rubber and a non-fluorine-containing rubber, cost and cold resistance are improved, but a fluorine-containing rubber and a non-fluorine-containing rubber such as an epichlorohydrin rubber are inferior in adhesion, which is disadvantageous from practical point of view.

For the purpose of solving the mentioned problems, there is disclosed a rubber composition prepared by adding an epoxy compound together with calcium hydroxide to an epichlorohydrin rubber (for example, cf. JP61-29619B). This patent publication says that adhesion to a fluorine-containing rubber is enhanced by using such a composition, however the adhesion is not sufficient.

As mentioned above, there were no laminated articles having sufficiently improved adhesion between a layer of a fluorine-containing rubber and a layer of a non-fluorine-containing rubber such as an epichlorohydrin rubber.

### DISCLOSURE OF INVENTION

The present invention provides a crosslinkable composition comprising a fluorine-containing rubber, a crosslinking agent and an additive, a laminated article having a rubber layer formed by using the composition, and a hose.

Namely, the present invention relates to a crosslinkable composition comprising a fluorine-containing rubber, a crosslinking agent and an additive, in which the additive is at least one compound selected from the group consisting of a compound represented by the formula (1): 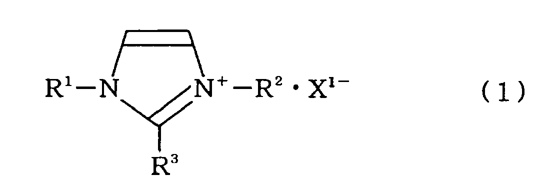 wherein R¹, R² and R³ are the same or different and each is hydrogen atom or a monovalent organic group having 1 to 30 carbon atoms; X¹⁻ is a monovalent anion,
a compound represented by the formula (2): 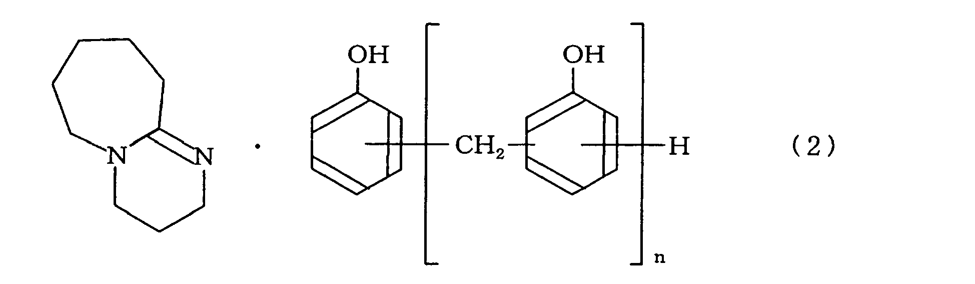 wherein n is 0 or an integer of 1 to 50, and
a compound represented by the formula (3):

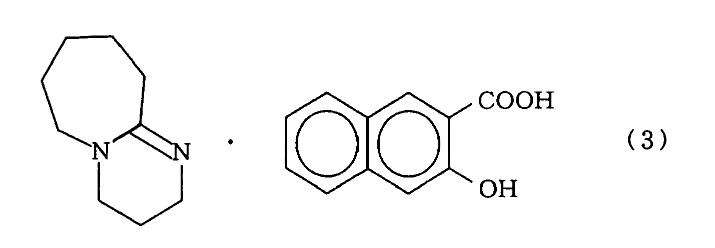

It is preferable that the crosslinkable composition comprises a crosslinking accelerator.

It is preferable that the crosslinking agent is a polyol crosslinking agent.

It is preferable that the fluorine-containing rubber comprises a vinylidene fluoride unit.

It is preferable that the fluorine content of fluorine-containing rubber is not less than 65 % by weight.

Also the present invention relates to a laminated article obtained by crosslinking for adhering a rubber layer formed by using the crosslinkable composition and a non-fluorine-containing rubber layer formed by using a non-fluorine containing rubber composition comprising a non-fluorine-containing rubber and a crosslinking agent.

It is preferable that the non-fluorine-containing rubber is an epichlorohydrin rubber.

Further the present invention relates to a hose comprising the above-mentioned laminated article.

### BEST MODE FOR CARRYING OUT THE INVENTION

The present invention relates to the crosslinkable composition comprising a fluorine-containing rubber, a crosslinking agent and an additive, in which the additive is at least one compound selected from the group consisting of the compound represented by the formula (1): 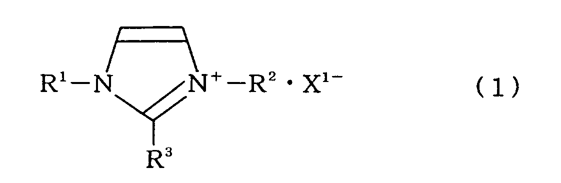 wherein R¹, R² and R³ are the same or different and each is hydrogen atom or a monovalent organic group having 1 to 30 carbon atoms; X¹⁻ is a monovalent anion,
the compound represented by the formula (2): 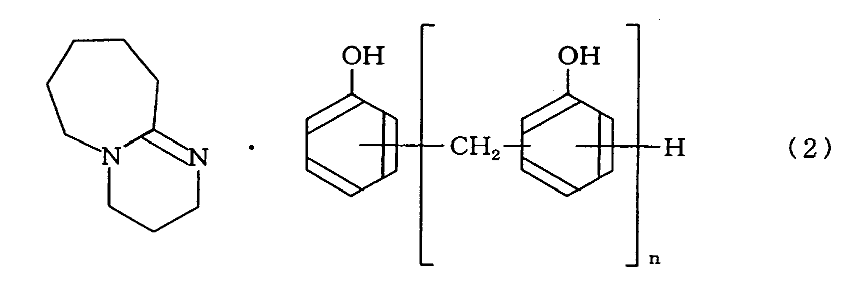 wherein n is 0 or an integer of 1 to 50, and
the compound represented by the formula (3):

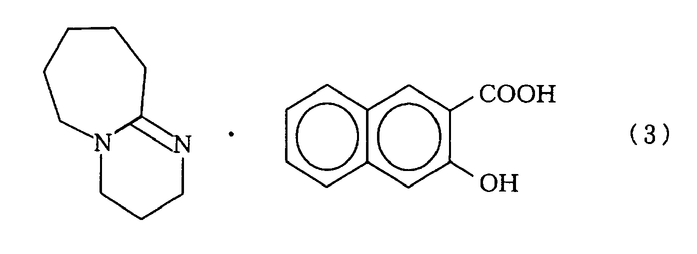

Examples of the fluorine-containing rubber to be used in the present invention are non-perfluoro fluorine-containing rubbers (a-1) and perfluoro fluorine-containing rubbers (a-2). The perfluoro fluorine-containing rubbers are those comprising not less than 90 % by mole of perfluoro monomer in component units thereof.

Examples of the non-perfluoro fluorine-containing rubbers (a-1) are fluorine-containing vinylidene fluoride (VdF) rubbers, fluorine-containing tetrafluoroethylene (TFE) / propylene rubbers, fluorine-containing tetrafluoroethylene (TFE) / propylene / vinylidene fluoride (VdF) rubbers, fluorine-containing ethylene /hexafluoropropylene (HFP) rubbers, fluorine-containing ethylene /hexafluoropropylene (HFP) / vinylidene fluoride (VdF) rubbers, fluorine-containing ethylene / hexafluoropropylene (HFP) /tetrafluoroethylene (TFE) rubbers, fluorine-containing fluorosilicone rubbers, fluorine-containing fluorophosphazene rubbers and the like. Those rubbers can be used alone or can be used in optional combination thereof to such an extent not to impair the effect of the present invention. It is preferable to use fluorine-containing vinylidene fluoride (VdF) rubbers or fluorine-containing tetrafluoroethylene (TFE) / propylene rubbers.

It is preferable that the fluorine-containing vinylidene fluoride (VdF) rubbers are those represented by the following formula (4).

-(M¹)-(M²)-(N¹)- (4)

wherein the structural unit M¹ is a structural unit derived from vinylidene fluoride (m¹); the structural unit M² is a structural unit derived from a fluorine-containing ethylenic monomer (m²); and the structural unit N¹ is a repeat unit derived from a monomer (n¹) copolymerizable with the monomer (m¹) and the monomer (m²).

Among the fluorine-containing vinylidene fluoride (VdF) rubbers represented by the formula (4), preferable is one comprising 20 to 85 % by mole of the structural unit M¹ and 80 to 15 % by mole of the structural unit M², and more preferable is one comprising 25 to 80 % by mole of the structural unit M¹ and 75 to 20 % by mole of the structural unit M². It is preferable that an amount of the structural unit N¹ is 0 to 10 % by mole based on the total amount of the structural unit M¹ and the structural unit M².

The fluorine-containing ethylenic monomer (m²) may be used alone or may be used in combination of two or more kinds thereof. Examples thereof are, for instance, fluorine-containing monomers such as tetrafluoroethylene (TFE), chlorotrifluoroethylene (CTFE), trifluoroethylene, hexafluoropropylene (HFP), trifluoropropylene, tetrafluoropropylene, pentafluoropropylene, trifluorobutene, tetrafluoroisobutene, perfluoro(alkyl vinyl ether) (PAVE) and vinyl fluoride. Of these monomers, tetrafluoroethylene, hexafluoropropylene and perfluoro(alkyl vinyl ether) are preferable.

As for the monomer (n¹), any of monomers copolymerizable with the monomer (m¹) and the monomer (m²) may be used. Examples thereof are, for instance, ethylene, propylene, alkyl vinyl ether and the like.

Preferable examples of such fluorine-containing vinylidene fluoride (VdF) rubbers are a VdF-HFP rubber, a VdF-HFP-TFE rubber, a VdF-CTFE rubber, a VdF-CTFE-TFE rubber and the like.

Preferable examples of the fluorine-containing tetrafluoroethylene (TFE) / propylene rubber are those represented by the following formula (5).

-(M³)-(M⁴)-(N²)- (5)

wherein the structural unit M³ is a structural unit derived from tetrafluoroethylene (m³); the structural unit M⁴ is a structural unit derived from propylene (m⁴); and the structural unit N² is a repeat unit derived from a monomer (n²) copolymerizable with the monomer (m³) and the monomer (m⁴).

Among the fluorine-containing tetrafluoroethylene (TFE) /propylene rubbers represented by the formula (5), preferable is one comprising 40 to 70 % by mole of the structural unit M³ and 60 to 30 % by mole of the structural unit M⁴, and more preferable is one comprising 50 to 60 % by mole of the structural unit M³ and 50 to 40 % by mole of the structural unit M⁴. It is preferable that an amount of the structural unit N² is 0 to 40 % by mole based on the total amount of the structural unit M³ and the structural unit M⁴.

As for the monomer (n²), any of monomers copolymerizable with the monomer (m³) and the monomer (m⁴) may be used, and the monomer (n²) is preferably a monomer giving a cure site.

Examples of such a monomer giving a cure site are, for instance, iodine-containing monomers such as perfluoro(6,6-dihydro-6-iodo-3-oxa-1-hexene) and perfluoro(5-iodo-3-oxa-1-pentene) disclosed in JP5-63482B and JP7-316234A, bromine-containing monomers disclosed in JP4-505341A, cyano group-containing monomers, carboxyl group-containing monomers and alkoxycarbonyl group-containing monomers disclosed in JP4-505345A and JP5-500070A.

Preferable as the perfluoro fluorine-containing rubbers (a-2) are those represented by the following formula (6).

-(M⁵)-(M⁶)-(N³)- (6)

wherein the structural unit M⁵ is a structural unit derived from tetrafluoroethylene (m⁵); the structural unit M⁶ is a structural unit derived from perfluoro(alkyl vinyl ether) (m⁶); and the structural unit N³ is a repeat unit derived from a monomer (n³) copolymerizable with the monomer (m⁵) and the monomer (m⁶).

Among the perfluoro fluorine-containing rubbers (a-2) represented by the formula (6), preferable is one comprising 50 to 90 % by mole of the structural unit M⁵ and 10 to 50 % by mole of the structural unit M⁶, more preferable is one comprising 50 to 80 % by mole of the structural unit M⁵ and 20 to 50 % by mole of the structural unit M⁶, and further preferable is one comprising 55 to 70 % by mole of the structural unit M⁵ and 30 to 45 % by mole of the structural unit M⁶. An amount of the structural unit N³ is preferably 0 to 5 % by mole, more preferably 0 to 2 % by mole based on the total amount of the structural unit M⁵ and the structural unit M⁶. If the amounts of those units are beyond the mentioned ranges, properties of the elastic rubber are lost, and there is a tendency that properties thereof become akin to properties of a resin.

Examples of perfluoro(alkyl vinyl ether) (m⁶) are, for instance, perfluoro(methyl vinyl ether), perfluoro(propyl vinyl ether) and the like. Those can be used alone or can be used in optional combination thereof.

As for the monomer (n³), any of monomers copolymerizable with the monomer (m⁵) and the monomer (m⁶) may be used, and the monomer (n³) is preferably a monomer giving a cure site.

Examples of such a monomer giving a cure site are, for instance, vinylidene fluoride, iodine- or bromine-containing monomers represented by the formula (7):

CY¹₂=CY¹-R_{f}¹CHR⁴X² (7)

wherein Y¹ is hydrogen atom, fluorine atom or -CH₃; R_{f}¹ is a fluoroalkylene group, a perfluoroalkylene group, a fluoro polyoxyalkylene group or a perfluoro polyoxyalkylene group; R⁴ is hydrogen atom or -CH₃; X² is an iodine atom or a bromine atom, monomers represented by the formula (8):

CF₂=CFO(CF₂CF(CF₃)O)ₘ(CF₂)ₙ-X³ (8)

wherein m is 0 or an integer of 1 to 5; n is an integer of 1 to 3; X³ is a cyano group, a carboxyl group, an alkoxycarbonyl group or bromine atom, and the like monomers. Those monomers can be used alone or can be used in optional combination thereof.

Those iodine atom, bromine atom, cyano group, carboxyl group and alkoxycarbonyl group can function as a cure site.

Examples of those perfluoro fluorine-containing rubbers (a-2) are fluorine-containing rubbers disclosed in WO97/24381, JP61-57324B, JP4-81608B, JP5-13961B and the like.

Preferably used as the fluorine-containing rubber (a) are those having a number average molecular weight of 30,000 to 1,200,000.

The non-perfluoro fluorine-containing rubbers (a-1) and perfluoro fluorine-containing rubbers (a-2) explained above can be prepared by a usual method. From the point that an obtained polymer has a narrow molecular weight distribution and control of the molecular weight is easy, an iodine transfer polymerization method known as a process for preparing a fluorine-containing rubber is preferable. For example, there are a method of solution polymerization, a method of emulsion-polymerizing the above-mentioned perhalo olefin and, if necessary, a monomer giving a cure site in the presence of an iodine compound, preferably a diiodine compound in an aqueous medium under pressure while stirring in the presence of a radical polymerization initiator in a substantially oxygen-free atmosphere and the like method. Representative examples of the iodine compound to be used are compounds represented by the formula (9):

R⁵IₓBr_{y} (9)

wherein each of x and y is 0 or an integer of 1 to 2, and 1 ≤ x + y ≤ 2 is to be satisfied; R⁵ is a saturated or unsaturated fluorohydrocarbon group or chlorofluorohydrocarbon group having 1 to 16 carbon atoms or a hydrocarbon group having 1 to 3 carbon atoms, and may contain an oxygen atom. To the end of the fluorine-containing rubber obtained using such an iodine compound is introduced an iodine atom or bromine atom.

Examples of the compounds represented by the formula (9) are, for instance, 1,3-diiodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, monoiodomonobromo-substituted benzene, diiodo-substituted benzene and (2-iodoethyl)- and (2-bromoethyl)-substituted benzene. These may be used alone or can be used in combination thereof.

Of these, from the viewpoint of polymerization reactivity, crosslinking reactivity and availability, 1,4-diiodoperfluorobutane and diiodomethane are preferable.

The radical polymerization initiator used in the present invention may be the same as initiators that have been used for polymerization of fluorine-containing rubbers. Examples of such initiators are organic and inorganic peroxides and azo compounds. Represented initiators are persulfates, percarbonates and peresters, and a preferable initiator is ammonium persulfate (APS). APS can be used alone or can be used in combination with reducing agents such as sulfites.

The emulsifier used for emulsion polymerization can be selected from a wide range, and from the viewpoint of inhibiting the chain transfer reaction to the emulsifier molecules that occurs during the polymerization, salts of carboxylic acid having a fluorocarbon chain or a fluoropolyether chain are preferable. The amount of the emulsifier is preferably about 0.05 to 2 % by weight, particularly preferably 0.2 to 1.5 % by weight based on the added water.

The monomer mixture gas to be used in the present invention is explosive as described in Advances in Chemistry Series, G.H. Kalb, et al., 129, 13 (1973), and therefore it is necessary to design a polymerization equipment not to cause sparking which becomes an ignition source.

The polymerization pressure can be changed in a wide range, and generally is in a range from 0.5 to 7 MPa. The higher the polymerization pressure is, the higher a polymerization rate is. Accordingly from the viewpoint of enhancement of productivity, the polymerization pressure is preferably not less than 0.8 MPa.

An adding amount of the compound represented by the formula (9) is preferably 0.0001 to 5 % by weight, more preferably 0.01 to 1 % by weight based on the total amount of the obtained fluorine-containing rubber.

In addition, a fluorine-containing silicone elastomer can be used as the fluorine-containing rubber, for example, a fluoro silicone rubber.

Further in the present invention, a composition comprising the above-mentioned fluorine-containing rubbers (a-1) and (a-2) and a thermoplastic fluorine-containing rubber.

Among the above-mentioned fluorine-containing rubbers, from the viewpoint of heat resistance, compression set, processability and cost, fluorine-containing rubbers containing a VdF unit is preferable, fluorine-containing VdF rubbers are more preferable, and VdF-HFP rubbers and VdF-HFP-TFE rubbers are particularly preferable.

In addition, it is more preferable to use fluorine-containing rubbers being capable of peroxide crosslinking and comprising a VdF unit from the viewpoint of satisfactory adhesion to the non-fluorine-containing rubber layer formed by using a non-fluorine-containing rubber composition.

The fluorine-containing rubbers being capable of peroxide crosslinking and comprising a VdF unit are preferably fluorine-containing rubbers comprising a VdF unit, more preferably fluorine-containing VdF rubbers to which a cure site being capable of peroxide crosslinking is introduced. Examples of the cure site are an iodine atom, a bromine atom, a cyano group, a carboxyl group, an alkoxycarbonyl group and the like.

The fluorine-containing rubbers explained above may be used alone or may be used in combination of two or more thereof.

In addition, the fluorine-containing rubber to be used in the present invention is preferably a fluorine-containing rubber having a fluorine content of not less than 65 % by weight, more preferably a fluorine-containing rubber having a fluorine content of not less than 68 % by weight. An upper limit of the fluorine content is not limited particularly, and is preferably not more than 74 % by weight. When the fluorine content is less than 65 % by weight, chemical resistance, fuel oil resistance and fuel permeability tend to be poor.

The crosslinkable composition of the present invention is prepared by blending a crosslinking agent to the above-mentioned fluorine-containing rubber. In addition, a crosslinking accelerator can be used together with the crosslinking agent.

The crosslinking agent and the crosslinking accelerator are used for crosslinking the fluorine-containing rubber. Herein the crosslinking means crosslinking between the same polymer chains or between different polymer chains of the fluorine-containing rubber by means of a crosslinking agent. By crosslinking in such a manner as mentioned above, a tensile strength of the fluorine-containing rubber is enhanced and the rubber has a satisfactory elasticity. The crosslinking accelerator differs from the additives represented by the formulae (1) to (3).

A crosslinking system to be used in the present invention may be optionally selected depending on kind of a cure site when the fluorine-containing rubber has a crosslinkable group (cure site) or depending on application of an obtained laminated article. Any of a polyol crosslinking agent, a peroxide crosslinking agent and a polyamine crosslinking agent can be used as a crosslinking agent.

Herein the crosslinked fluorine-containing rubber obtained by crosslinking with a polyol crosslinking agent is characterized in that since its cure site has a carbon-oxygen bond, a compression set is small, and moldability is excellent. Accordingly, the rubber is suitable for the hose of the present invention.

The crosslinked fluorine-containing rubber obtained by crosslinking with a peroxide crosslinking agent has a carbon-carbon bond in its cure site, and therefore is characterized by being excellent in chemical resistance and steam resistance as compared with polyol crosslinking in which its cure site has a carbon-oxygen bond and polyamine crosslinking in which its cure site has a carbon-carbon double bond.

The crosslinked fluorine-containing rubber obtained by crosslinking with a polyamine crosslinking agent has a carbon-nitrogen double bond in its cure site, and therefore is characterized by being excellent in dynamic mechanical characteristics, but its compression set tends to be increased as compared with crosslinked fluorine-containing rubbers obtained by using a polyol crosslinking agent or a peroxide crosslinking agent.

It is preferable from the viewpoint of adhesion to the non-fluorine-containing rubber layer that the crosslinkable composition of the present invention is prepared by using a polyol crosslinking agent.

In the present invention, polyamine, polyol and peroxide crosslinking agents generally known as a crosslinking agent for fluorine-containing rubbers can be used as a crosslinking agent.

Examples of the polyamine crosslinking agent are, for instance, polyamine compounds such as hexamethylenediamine carbamate, N,N'-dicinnamylidene-1,6-hexamethylenediamine and 4,4'-bis(aminocyclohexyl)methane carbamate. Of these compounds, N,N'-dicinnamylidene-1,6-hexamethylenediamine is preferable.

For polyol crosslinking, compounds known as a crosslinking agent for fluorine-containing rubbers can be used, for example, polyhydroxy compounds, particularly polyhydroxy aromatic compounds are suitably used from the viewpoint of excellent heat resistance.

The above-mentioned polyhydroxy aromatic compounds are not limited particularly, and for example, there are 2,2-bis(4-hydroxyphenyl)propane (hereinafter referred to as bisphenol A), 2,2-bis(4-hydroxyphenyl)perfluoropropane (hereinafter referred to as bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenylsulfone, 4,4'-dihydroxydiphenylketone, tri(4-hydroxyphenyl)methane, 3,3',5,5'-tetrachlorobisphenol A, 3,3',5,5'-tetrabromobisphenol A and the like. Those polyhydroxy aromatic compounds may be alkali metal salts, alkali earth metal salts and the like. However in the case of coagulating a copolymer by using an acid, it is preferable not to use the above-mentioned metal salts.

A crosslinking agent for peroxide crosslinking may be a compound having activity for a reaction with a peroxy radical and a polymer radical, and for example, there are polyfunctional compounds having a functional group such as CH₂=CH-, CH₂=CHCH₂- and CF₂=CF-. Specifically there are, for example, triallyl cyanurate, triallyl isocyanurate (TAIC), trimethallyl isocyanurate, TAIC prepolymer, triacryl formal, triallyl trimellitate, N,N'-n-phenylenebismaleimide, dipropargyl terephthalate, diallyl phthalate, tetraallyl terephthalateamide, triallyl phosphate, bismaleimide, fluorinated triallylisocyanurate (1,3,5-tris(2,3,3-trifluoro-2-propenyl)-1,3,5-triazine-2,4,6-trione), tris(diallylamine)-S-triazine, triallyl phosphite, N,N-diallyl acrylamide, 1,6-divinyldodecafluorohexane, hexaallylphospholamide, N,N,N',N'-tetraallyl tetraphthalamide, N,N,N',N'-tetraallyl malonamide, trivinyl isocyanurate, 2,4,6-trivinylmethyltrisiloxane, tri(5-norbornene-2-methylene)cyanurate, triallyl phosphite and the like. Of these compounds, triallyl isocyanurate (TAIC) is preferable from the viewpoint of crosslinkability and physical properties of a crosslinked product.

Of these compounds, polyhydroxy compounds are preferable from the viewpoint that compression set of the crosslinked fluorine-containing rubber is small and moldability is excellent, and polyhydroxy aromatic compounds are more preferable, and bisphenol AF is further preferable from the viewpoint of excellent heat resistance.

A blending amount of crosslinking agent is preferably 0.2 to 10 parts by weight, more preferably 0.5 to 6 parts by weight, further preferably 1 to 5 parts by weight based on 100 parts by weight of the fluorine-containing rubber. When the amount of crosslinking agent is less than 0.2 part by weight, there is a tendency that a crosslinking density is decreased and compression set is increased. When the amount of crosslinking agent exceeds 10 parts by weight, a crosslinking density becomes too high, and breakage tends to occur easily at compression.

In addition, in polyol crosslinking, it is preferable to use a crosslinking accelerator together with the polyol crosslinking agent. By using a crosslinking accelerator, formation of an intermolecular double bond through de-hydrofluoric acid reaction on the trunk chain of the fluorine-containing rubber is accelerated, thereby enabling a crosslinking reaction to be accelerated.

Preferable as a crosslinking accelerator for polyol crosslinking are compounds which have property of being hardly added to the trunk chain of the fluorine-containing rubber, and generally onium compounds are used. An onium compound is not limited particularly and there are, for example, ammonium compounds such as quaternary ammonium salts, phosphonium compounds such as quaternary phosphonium salts, oxonium compounds, sulfonium compounds, cyclic amines, mono-functional amine compounds and the like. Of these compounds, quaternary ammonium salts and quaternary phosphonium salts are preferable.

The quaternary ammonium salt is not limited particularly, and examples thereof are, for instance, 8-methyl-1,8-diazabicyclo[5,4,0]-7-undeceniumchloride, 8-methyl-1,8-diazabicyclo[5,4,0]-7-undeceniumiodide, 8-methyl-1,8-diazabicyclo[5,4,0]-7-undeceniumhydroxide, 8-methyl-1,8-diazabicyclo[5,4,0]-7-undeceniummethylsulfate, 8-ethyl-1,8-diazabicyclo[5,4,0]-7-undeceniumbromide, 8-propyl-1,8-diazabicyclo[5,4,0]-7-undeceniumbromide, 8-dodecyl-1,8-diazabicyclo[5,4,0]-7-undeceniumchloride, 8-dodecyl-1,8-diazabicyclo[5,4,0]-7-undeceniumhydroxide, 8-eicosyl-1,8-diazabicyclo[5,4,0]-7-undeceniumchloride, 8-tetracosyl-1,8-diazabicyclo[5,4,0]-7-undeceniumchloride, 8-benzyl-1,8-diazabicyclo[5,4,0]-7-undeceniumchloride (hereinafter referred to as DBU-B), 8-benzyl-1,8-diazabicyclo[5,4,0]-7-undeceniumhydroxide, 8-phenetyl-1,8-diazabicyclo[5,4,0]-7-undeceniumchloride, 8-(3-phenylpropyl)-1,8-diazabicyclo[5,4,0]-7-undeceniumchloride and the like. Among these, DBU-B is preferable from the viewpoint of crosslinkability and physical properties of a crosslinked product.

The quaternary phosphonium salt is not limited particularly, and examples thereof are, for instance, tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, benzylphenyl(dimethylamino)phosphonium chloride and the like. Among these, benzyltriphenylphosphonium chloride (BTPPC) is preferable from the viewpoint of crosslinkability and physical properties of a crosslinked product.

In addition, quaternary ammonium salts, solid solutions of quaternary phosphonium salts and bisphenol AF, and chlorine-free crosslinking accelerators disclosed in JP11-147891A can be used as a crosslinking accelerator.

A peroxide crosslinking accelerator is an organic peroxide being capable of easily generating a peroxy radical in the presence of heat or oxidation-reduction system. Examples thereof are, for instance, 1, 1-bis(t-butylperoxy)-3,5,5-trimethylcyclohexane, 2,5-dimethylhexane-2,5-dihydroperoxide, di-t-butyl peroxide, t-butylcumyl peroxide, dicumyl peroxide, α,α-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoyl peroxide, t-butylperoxybenzene, t-butylperoxymaleic acid, t-butylperoxyisopropyl carbonate and the like. Among them, 2,5-dimethyl-2,5-di(t-butylperoxy)hexane is preferable.

An amount of crosslinking accelerator is preferably 0.1 to 2.0 parts by weight, more preferably 0.1 to 1.5 parts by weight, further preferably 0.1 to 0.7 part by weight based on 100 parts by weight of the fluorine-containing rubber. When the amount of crosslinking accelerator is less than 0.1 part by weight, since the crosslinking speed becomes slow, productivity tends to be lowered, and when the amount exceeds 2.0 parts by weight, since the crosslinking speed becomes too fast, there is a tendency that scorch and molding failure easily arise.

An additive which is used in the present invention is at least one compound selected from the group consisting of the compound represented by the formula (1): 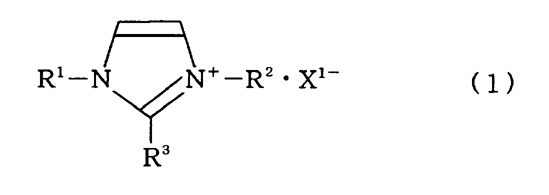 wherein R¹, R² and R³ are the same or different and each is hydrogen atom or a monovalent organic group having 1 to 30 carbon groups, X¹⁻ is a monovalent anion,
the compound represented by the formula (2): 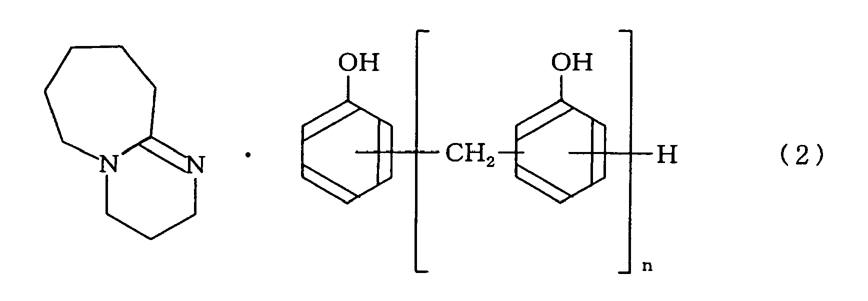 wherein n is 0 or an integer of 1 to 50, and the compound represented by the formula (3):

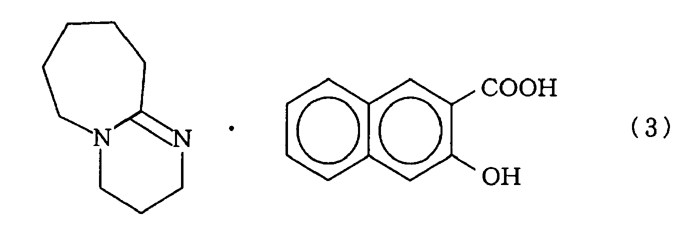

In the formula (1), R¹, R² and R³ are the same or different and each is hydrogen atom or a monovalent organic group having 1 to 30 carbon groups. The monovalent organic group having 1 to 30 carbon groups is not limited particularly, and examples thereof are an aliphatic hydrocarbon group, an aryl group such as a phenyl group and a benzyl group. Specifically there are, for example, alkyl groups having 1 to 30 carbon groups such as -CH₃, -C₂H₅ and -C₃H₇; halogen atom-containing alkyl groups having 1 to 30 carbon groups such as -CX⁴₃, -C₂X⁴₅, -CH₂X⁴, -CH₂CX⁴₃ and -CH₂C₂X⁴₅ where X⁴ is a fluorine atom, a chlorine atom, a bromine atom or an iodine atom; a phenyl group; a benzyl group; a phenyl group or a benzyl group, in which 1 to 5 hydrogen atoms are substituted by fluorine atoms such as -C₆F₅ and -CH₂C₆F₅; and a phenyl group or a benzyl group, in which 1 to 5 hydrogen atoms are substituted by -CF₃ such as -C₆H₅₋ₙ(CF₃)ₙ and -CH₂C₆H₅₋ₙ(CF₃)ₙ where n is an integer of 1 to 5. The organic group may have nitrogen atom as shown below.

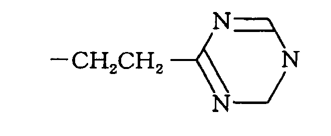

Among these groups, each of R¹, R² and R³ is preferably an alkyl group having 1 to 20 carbon atoms or benzyl group from the viewpoint of satisfactory adhesion to the non-fluorine-containing rubber layer formed by using the non-fluorine-containing rubber composition.

X¹⁻ in the formula (1) is a monovalent anion, and examples thereof are halogen ions (F⁻, Cl⁻, Br⁻, I⁻), OH⁻, RO⁻, RCOO⁻, C₆H₅O⁻, SO₄²⁻, SO₃²⁻, SO₂⁻, RSO₃²⁻, CO₃²⁻, NO₃⁻ (R is a monovalent organic group) and the like. Among these, Cl⁻ is preferable.

Among these compounds, a compound represented by: 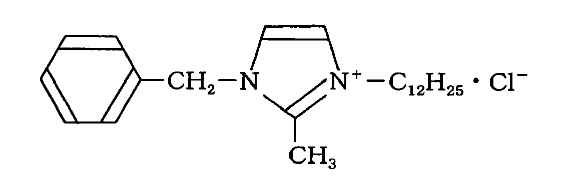 is preferable as the compound of the formula (1) from the viewpoint of satisfactory adhesion to the non-fluorine-con-taining rubber layer formed by using the non-fluorine-containing rubber composition.

In the formula (2), n is 0 or an integer of 1 to 50, and is more preferably 0 or an integer of 1 to 10, further preferably an integer of 1 to 5 from the viewpoint of dispersibility at kneading with the fluorine-containing rubber.

Of the compounds represented by the formulae (1) to (3), the compound of the formula (1) is preferable from the viewpoint of satisfactory adhesion to the non-fluorine-containing rubber layer formed by using the non-fluorine-containing rubber composition.

An amount of the additives represented by the formulae (1) to (3) is preferably 0.01 to 10 parts by weight, more preferably 0.05 to 5 parts by weight, further preferably 0.05 to 2 parts by weight based on 100 parts by weight of the fluorine-containing rubber. When the amount of the additive is less than 0.01 part by weight, adhesion to the non-fluorine-containing rubber layer tends to be poor, and when the amount is more than 10 parts by weight, elongation of the fluorine-containing rubber layer after crosslinking tends to be poor.

In addition, there can be blended various usual additives to be blended to a crosslinkable composition as case demands, for example, a filler, a processing aid, a plasticizer, a colorant, a stabilizer, an adhesion aid, an acid acceptor, a mold releasing agent, an electric conductivity imparting agent, a thermal conductivity imparting agent, an agent to impart non-adhesiveness to surface, a flexibility imparting agent, a heat resistance improver, a flame retardant and the like. To the rubber composition may be blended one or more usual crosslinking agents or crosslinking accelerators which are different from the additives mentioned above.

The crosslinkable composition of the present invention can be obtained by kneading the fluorine-containing rubber, the crosslinking agent, the additives represented by the formulae (1) to (3) and other compounding agents to be blended as case demands such as a crosslinking accelerator and a filler by using a rubber kneading equipment generally used. A roll, kneader, Banbury mixer, internal mixer, twin screw extruder or the like can be used as the rubber kneading equipment.

Particularly when using a polyhydroxy compound as a crosslinking agent, in many cases, melting points of a crosslinking agent and a crosslinking accelerator are relatively high, and in order to uniformly disperse them in the rubber, preferable is a method of kneading a crosslinking agent and a crosslinking accelerator while melting at high temperature of 120° to 200°C by using a closed kneading equipment such as a kneader and then kneading other compounding agents such as a filler at relatively low temperature lower than the temperature mentioned above. In addition, there is a method of uniformly dispersing by using a solid solution obtained by once melting a crosslinking agent and a crosslinking accelerator to decrease a melting point.

In addition, dispersibility can be further increased by kneading the fluorine-containing rubber, the crosslinking agent, the additives represented by the formulae (1) to (3) and as case demands, other compounding agents such as a crosslinking accelerator and a filler, allowing to stand at room temperature for 12 hours or more and then carrying out kneading again.

Also the present invention relates to the laminated article obtained by crosslinking and adhering the rubber layer formed by using the afore-mentioned crosslinkable composition and the non-fluorine-containing rubber layer formed by using the non-fluorine-containing rubber composition comprising the non-fluorine-containing rubber and a crosslinking agent.

The non-fluorine-containing rubber in the non-fluorine-containing rubber composition is not limited particularly, and examples thereof are a butadiene-acrylonitrile rubber, styrene-butadiene rubber, polychloroprene, ethylene-propylene-termonomer copolymer, chlorinated polystyrene, chlorosulfonated polystyrene, silicone rubber, butyl rubber, epichlorohydrin rubber, acrylic rubber, ethylene-vinyl acetate copolymer, α,β-unsaturated nitrile-conjugated diene copolymer rubber and hydrogenated products thereof. Of these rubbers, epichlorohydrin rubber is preferable from the viewpoint of fuel oil resistance and heat resistance. Also a butadiene-acrylonitrile rubber is preferable from the viewpoint of heat resistance and oil resistance.

Any of crosslinking agents used for usual non-fluorine-containing rubbers can be used as a crosslinking agent. For example, there are crosslinking agents such as sulfur crosslinking agents, peroxide crosslinking agents, polythiol crosslinking agents, quinoid crosslinking agents, resin crosslinking agents, metal oxides, diamine crosslinking agents, polythiols and 2-mercaptoimidazoline, and particularly diamine crosslinking agents, polythiols and 2-mercaptoimidazoline are preferable from the viewpoint of adhesion characteristics.

An amount of the crosslinking agent is preferably 0.2 to 10 parts by weight, more preferably 0.5 to 8 parts by weight based on 100 parts by weight of the non-fluorine-containing rubber. When the amount of the crosslinking agent is less than 0.2 part by weight, there is a tendency that a crosslinking density is decreased and compression set is increased. When the amount of the crosslinking agent exceeds 10 parts by weight, a crosslinking density is increased excessively and breakage of the rubber tends to occur easily at the time of compression.

The non-fluorine-containing rubber composition can contain the non-fluorine-containing rubber, the crosslinking agent and in addition, an accelerator, and further to the composition can be added other additives usually used in this field such as an acid acceptor, a reinforcing agent, a filler, a plasticizer and an antioxidant as case demands.

Examples of the accelerator are aldehyde amines, aldehyde ammonia, thiourea, thiazoles, thiophene amides, thiurams, dithiocarbamates, 1,8-diazabicyclo[5,4,0]-7-undecene (DBU), weak acid salts of DBU and the like. Examples of the weak acid salts of DBU are carbonates, long chain aliphatic carboxylates, aromatic carboxylates, phenolic salts, phenolic resin salts and the like. Represented examples thereof are DBU carbonate, DBU stearate, DBU sorbitate, aromatic acid salt of DBU, DBU naphthoate, phenolic acid salt of DBU and the like.

The non-fluorine-containing rubber composition can be obtained by kneading with a rubber kneading equipment generally used in the same manner as in the afore-mentioned crosslinkable composition.

Also use of a crosslinkable composition comprising a fluorine-containing rubber containing a VdF unit and being capable of peroxide crosslinking and a polyol crosslinking agent is preferable from the point that adhesion between the rubber layer and the non-fluorine-containing rubber layer becomes satisfactory in the case of a laminated article obtained by crosslinking for adhering the rubber layer formed by using the afore-mentioned crosslinkable composition and the non-fluorine-containing rubber layer formed by using the non-fluorine-containing rubber composition comprising a non-fluorine-containing rubber and a polyol crosslinking agent.

In the laminated article of the present invention, the laminating method is not limited particularly, and a usual laminating method can be employed. For example, the laminated article can be produced from the crosslinkable composition and the non-fluorine-containing rubber composition by extruding two layers simultaneously with an extruder or by extruding an outer layer on an inner layer with two extruders to form an inner tube rubber layer comprising the inner layer and the outer layer, and then extruding an outer tube rubber layer to unite the two rubber layers in a body and subjecting them to crosslinking for adhering.

Crosslinking conditions may be optionally determined depending on kind of a crosslinking agent, etc., and usually baking is carried out at 150° to 300°C for one minute to 24 hours.

For crosslinking, usual methods such as steam crosslinking can be employed, and in addition, a crosslinking reaction can be proceeded under any conditions such as under normal pressure, under pressure, under reduced pressure or in the air.

In the laminated article of the present invention, since the rubber layer formed by using the crosslinkable composition of the present invention is used, adhesion of the rubber layer to the non-fluorine-containing rubber layer formed by using the non-fluorine-containing rubber composition is excellent and the laminated article has chemical resistance, oil resistance, heat resistance and cold resistance. The laminated article is useful as a hose, particularly hoses for engine and peripheral equipment thereof, automatic transmission, fuel line and peripheral equipment thereof and the like of automobiles.

Application of the crosslinkable composition of the present invention is not limited particularly, and examples are, for instance, sealing materials such as gaskets and non-contact type and contact type packings (self-seal packing, piston ring, split ring packing, mechanical seal, oil seal, etc.) which require heat resistance, oil resistance, fuel oil resistance, resistance to an antifreezing fluid for cooling an engine and steam resistance and are used for automobile engine such as engine proper, main engine-driving system, engine-driving valve system, lubricating and cooling system, fuel system, and suction/exhaust system; transmission of drive system; steering system of chassis; brake system; standard electrical parts for instrumentation, electrical parts for control and equipped electrical parts.

Sealing materials used on an engine body for automobiles are not limited particularly, and examples thereof are, for instance, gaskets such as a cylinder head gasket, cylinder head cover gasket, oil pan packing and general gaskets, and sealing materials such as an O-ring, packing and timing belt cover gaskets.

Sealing materials used for a main drive system of an automobile engine are not limited particularly, and examples thereof are, for instance, shaft seals such as crank shaft seal and cam shaft seal.

Sealing materials used for valves of an automobile engine are not limited particularly, and examples thereof are, for instance, a valve stem oil seal of an engine valve.

Sealing materials used for a lubricating and cooling system of an automobile engine are not limited particularly, and examples thereof are, for instance, a seal gasket for an engine oil cooler and the like.

Sealing materials used for a fuel system of an automobile engine are not limited particularly, and examples thereof are, for instance, an oil seal of a fuel pump, a filler seal and tank packing of a fuel tank, a connector O-ring of a fuel tube, an injector cushion ring, an injector seal ring and an injector O-ring of a fuel injector, a flange gasket of a carburetor and the like.

Sealing materials used for a suction/exhaust system of an automobile engine are not limited particularly, and examples thereof are, for instance, a suction packing and exhaust packing of a manifold, a throttle body packing, a turbine shaft seal of a turbo charger and the like.

Sealing materials used for a transmission system of an automobile engine are not limited particularly, and examples thereof are, for instance, a bearing seal, oil seal, O-ring and packing for transmission and an O-ring and packing for automatic transmission.

Sealing materials used for a brake system of an automobile engine are not limited particularly, and examples thereof are, for instance, an oil seal, O-ring, packing, piston cup (rubber cup) of a master cylinder, caliper seal, boots and the like.

Sealing materials used for electrical parts of an automobile engine are not limited particularly, and examples thereof are, for instance, an O-ring and packing of an air conditioner.

Applications other than automobile application are not limited particularly, and examples thereof are, for instance, packing, O-ring and sealing material requiring oil resistance, chemical resistance, heat resistance, steam resistance and weather resistance for transport means such as ships and air planes; similar packing, O-ring and sealing material for chemical plants; similar packing, O-ring and sealing material for food plant equipment and food processing equipment (including those for domestic use); similar packing, O-ring and sealing material for equipment of atomic power plant; and similar packing, O-ring and sealing material for general industrial parts.

### EXAMPLES

The present invention is then explained by means of examples, but is not limited to those examples.

### <Vulcanization characteristics>

A vulcanization curve is obtained at 160°C at primary press vulcanization by using JSR type curastometer model II, and a minimum viscosity (ML), a degree of vulcanization (MH), an induction time (T10) and an optimum vulcanization time (T90) are determined.

### <Mooney scorch test>

The obtained fluorine-containing rubber is passed three times through a kneading roll equipment (distance between the rolls: about 1 mm) equipped with two 8-inch rolls to be formed into a sheet, and a minimum viscosity (Vm), t5 and t35 are measured by preheating at 145°C for one minute and using a Mooney viscosity meter (MV2000E available from ALPHA TECHNOLOGIES, INC) and a L type rotor according to JIS K 6300 (1994).

### <100 % modulus (M100)>

Crosslinkable compositions shown in Table 1 are subjected to primary press vulcanization under standard vulcanization conditions to make 2 mm thick sheets, and measurement is carried out according to JIS K 6251.

### (Standard vulcanization conditions)

### Kneading method: Kneading with rolls

### Press vulcanization: 15 minutes at 170°C

### <Tensile strength at break (Tb) and tensile elongation at break (Eb)>

A tensile strength at break and a tensile elongation at break of the crosslinked sheets obtained in Examples and Comparative Examples are measured at 23°C at 500 mm/min according to JIS K 6251 (1993) with a tension tester (TENSILON available from Orientec Corporation) by using a dumbbell No. 4.

### <Hardness>

A hardness is measured with a type A durometer (brand name: ASKER available from Kobunshi Keiki Kaisha Limited) according to JIS K 6253 (1997) by using the crosslinked sheets obtained in Examples and Comparative Examples.

### <Adhesion>

A 1 mm thick un-crosslinked fluorine-containing rubber sheet and a 1 mm thick un-crosslinked non-fluorine-containing rubber sheet are overlapped each other and put in a heated metallic mold, followed by compression at 170°C for 15 minutes for crosslinking to obtain a sheet-like laminated article. The obtained laminated article is cut into a 25 mm wide × 100 mm long strip to obtain a test piece, and an adhesive strength is measured by T-shape peel test at 23°C at a peeling rate of 50 mm/min. A peeling mode is observed and evaluated by the following criteria.

### (Peeling mode)

○: A material sheet is broken.
x: Peeling occurs at an interface between the fluorine-containing rubber and the non-fluorine-containing rubber.

Brand names in Table and specification represent those mentioned below.
Crosslinking agent: Bisphenol AF
Crosslinking accelerator: DBU-B
Additive A: 1-Dodecyl-2-methyl-3-benzylimidazolium chloride (CUREZOL SFZ available from SHIKOKU CHEMICALS CORPORATION) Additive B: Salt of 1,8-diazabicyclo[5,4,0]undecene-7 and phenolic resin (P-152 available from DAISO CO., LTD.)
Seast S: SRF carbon (available from Tokai Carbon Co., Ltd.)
MA-150: Highly activated magnesium oxide (available from KYOWA CHEMICAL INDUSTRY CO., LTD.)
CALDIC2000: Calcium hydroxide (available from Ohmi Chemical Co., Ltd.)
NBR: Rubber composition comprising acrylonitrile-butadiene rubber (N530 available from JSR Corporation) (60 parts by weight of carbon black, 5 parts by weight of zinc oxide, 1 part by weight of stearic acid, 2 parts by weight of antioxidant, 15 parts by weight of plasticizer and 3 parts by weight of peroxide based on 100 parts by weight of the rubber) ECO: Rubber composition comprising epichlorohydrin rubber (EPICHLOMER H available from DAISO CO., LTD.) (60 parts by weight of carbon black, 10 parts by weight of plasticizer, 1 part by weight of antioxidant, 3 parts by weight of MgO, 1 part by weight of vulcanizing agent, 0.3 part by weight of sulfur and 0.5 part by weight of vulcanization retardant based on 100 parts by weight of the rubber)

### EXAMPLE 1

Into a 3-liter pressure type kneader was gradually poured 4 kg of a three-component fluorine-containing rubber A (vinylidene/tetrafluoroethylene/hexafluoropropylene=50:20:30 in percent by mole ratio) prepared by a known process in an amount shown in Table 1 while heating a jacket of the kneader to 140°C with a heater, and thereafter 80 g of bisphenol-AF, 20 g of DBU-B and 20 g of additive A, followed by kneading for 12 minutes. A rotor was stopped every three minutes during the kneading, and a pressure cover was opened and an upper portion and a lower portion of the rubber were reversed by a reverse rotation of the rotor. Then an inside pressure of the kneader was increased again, thus repeating the kneading. The rubber temperature just after completion of the kneading was 150°C. The number of rotations of the rotor was set at 33 rpm for a front blade and at 22 rpm for a rear blade.

The rubber after completion of the kneading was cooled and finally subjected to sheeting by using a kneading roll equipment equipped with two rolls having a 12-inch diameter, and a composition comprising a fluorine-containing rubber, a crosslinking agent, a crosslinking accelerator and additives was taken out.

The composition, Seast S, highly activated magnesium oxide and calcium hydroxide were poured in amounts shown in Table 1 into a kneading roll equipment equipped with two 8-inch rolls, followed by kneading at 25° to 70°C by a usual method. After allowing to stand at room temperature for about 20 hours, kneading was carried out again with the same roll equipment, and the mixture was finally formed into a sheet having a thickness of about 2 mm. Thus an un-crosslinked rubber sheet was taken out.

Vulcanizability, Mooney scorch and physical properties under normal conditions of the obtained crosslinkable composition were evaluated. In addition, adhesion was evaluated by using the obtained un-crosslinked rubber sheet and an un-crosslinked rubber sheet comprising NBR and ECO.

### EXAMPLE 2 and COMPARATIVE EXAMPLE 1

Crosslinked sheets were obtained by the same method as in Example 1 except that compounding conditions shown in Table 1 were adopted.

Vulcanizability, Mooney scorch and physical properties under normal conditions of the obtained crosslinkable compositions were evaluated. In addition, adhesion was evaluated by using the obtained un-crosslinked rubber sheets and an un-crosslinked rubber sheet comprising NBR and ECO.

### EXAMPLES 3 to 5

Crosslinked sheets were obtained by the same method as in Example 1 except that compounding conditions shown in Table 1 were adopted, and a peroxide-vulcanizable three-component fluorine-containing rubber B (vinylidene/tetrafluoroethylene/hexafluoropropylene=50:20:30 in percent by mole ratio) prepared by a known iodine transfer polymerization process and the three-component fluorine-containing rubber B used in Example 1 were used.

Vulcanizability, Mooney scorch and physical properties under normal conditions of the obtained crosslinkable compositions were evaluated. In addition, adhesion was evaluated by using the obtained un-crosslinked rubber sheets and an un-crosslinked rubber sheet comprising NBR and ECO.

**TABLE 1**

| | | Example | | | | | Com. Ex. 1 |
|---|---|---|---|---|---|---|---|
| | | 1 | 2 | 3 | 4 | 5 | |
| Pre-compound (part by weight) | Fluorine-containing rubber A | 100 | 100 | 90 | 50 | 70 | 100 |
| | Fluorine-containing rubber B | - | - | 10 | 50 | 30 | - |
| | Vulcanizing agent | 2.0 | 2.0 | 2.0 | 2.0 | 2.0 | 2.0 |
| | Accelerator | 0.5 | 0.5 | 0.4 | 0.4 | 0.4 | 0.5 |
| | Additive A | 0.5 | - | 0.5 | 0.5 | 0.5 | - |
| | Additive B | - | 0.2 | - | - | - | - |
| Filler (part by weight) | Pre-compound | 100 | 100 | 100 | 100 | 100 | 100 |
| | Seast S | 20 | 20 | 20 | 20 | 20 | 20 |
| | CALDIC2000 | 6 | 6 | 6 | 6 | 6 | 6 |
| | MA150 | 3 | 3 | 3 | 3 | 3 | 3 |
| Results of evaluation | | | | | | | |
| Vulcanizability 160°C II type | ML (N) | 3.0 | 3.0 | 3.0 | 2.9 | 2.9 | 2.9 |
| | MH (N) | 17.0 | 26.5 | 14.5 | 14.3 | 14.1 | 12.8 |
| | T10 (min) | 2.5 | 7.0 | 4.1 | 2.6 | 3.2 | 5.4 |
| | T90 (min) | 4.5 | 10.8 | 7.0 | 5.6 | 6.8 | 12.5 |
| Mooney scorch 145°C L rotor | Vm | - | - | 42.0 | 32.1 | 38.0 | 43.0 |
| | t5 | - | - | 9.8 | 7.0 | 8.6 | 12.1 |
| | t35 | - | - | 13.5 | 11.1 | 12.5 | 19.9 |
| Molding conditions | | 170°C × 15 min | | | | | |
| Physical properties under normal conditions | M100 (MPa) | 4.4 | 5.9 | 4.1 | 4.5 | 4.0 | 3.9 |
| | Tb (MPa) | 11.8 | 12.0 | 11.4 | 9.0 | 9.8 | 12.4 |
| | Eb (%) | 340 | 195 | 395 | 310 | 390 | 360 |
| | Hs | 83 | 83 | 85 | 85 | 85 | 80 |
| Adhesive strength 170°C × 15 min (N/cm) | NBR | 30 | 31 | 30 | 31 | 29 | 29 |
| | ECO | 31 | 32 | 31 | 29 | 29 | 29 |
| Peeling mode Peeling mode | NBR | × | × | ○ | ○ | ○ | × |
| | ECO | ○ | ○ | ○ | ○ | ○ | × |

### INDUSTRIAL APPLICABILITY

According to the crosslinkable composition of the present invention, adhesion to the non-fluorine-containing rubber layer formed by using the non-fluorine-containing rubber composition can be improved by the addition of specific additives.

## Claims

1. A crosslinkable composition comprising a fluorine-containing rubber, a crosslinking agent and an additive, in which said additive is at least one compound selected from the group consisting of a compound represented by the formula (1): 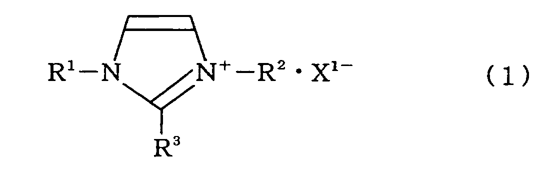 wherein R¹, R² and R³ are the same or different and each is hydrogen atom or a monovalent organic group having 1 to 30 carbon atoms; X¹⁻ is a monovalent anion,
a compound represented by the formula (2): 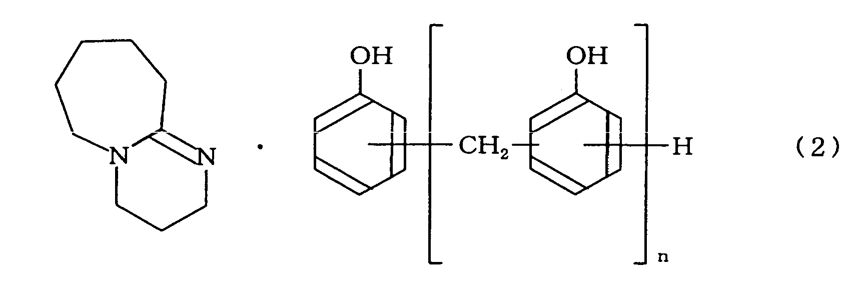 wherein n is 0 or an integer of 1 to 50, and
a compound represented by the formula (3):

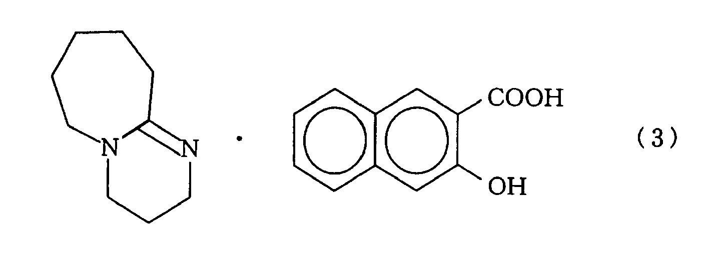

2. The crosslinkable composition of Claim 1 comprising a crosslinking accelerator.

3. The crosslinkable composition of Claim 1 or 2, wherein the crosslinking agent is a polyol crosslinking agent.

4. The crosslinkable composition of any of Claims 1 to 3, wherein the fluorine-containing rubber is a fluorine-containing rubber comprising a vinylidene fluoride unit.

5. The crosslinkable composition of any of Claims 1 to 4, wherein the fluorine-containing rubber is a fluorine-containing rubber having a fluorine content of not less than 65 % by weight.

6. A laminated article obtained by crosslinking and adhering a rubber layer formed by using the crosslinkable composition of any of Claims 1 to 5 and a non-fluorine-containing rubber layer formed by using a non-fluorine-containing rubber composition comprising a non-fluorine-containing rubber and a crosslinking agent.

7. The laminated article of Claim 6, wherein the non-fluorine-containing rubber is an epichlorohydrin rubber.

8. A hose comprising the laminated article of Claim 6 or 7.
